# EUROPÄISCHE PATENTSCHRIFT

(11) **EP 3 137 786 B1**
(45) Veröffentlichungstag und Bekanntmachung des Hinweises auf die Patenterteilung: **13.03.2019**
(21) Anmeldenummer: 15713465.1
(22) Anmeldetag: 30.03.2015
(51) Int. Cl.: F16F 15/12, F16F 15/131, F16F 15/14

(54) **SCHWINGUNGSDÄMPFEREINHEIT**
TORSIONAL VIBRATION DAMPER
AMORTISSEUR D'OSCILLATION DE TORSION

(30) Priorität: 28.04.2014 DE 102014207960
(43) Veröffentlichungstag der Anmeldung: 08.03.2017
(73) Patentinhaber: ZF Friedrichshafen AG, 88046 Friedrichshafen (DE)
(72) Erfinder: FAUSS, Christoph, 97456 Dittelbrunn (DE); SCHIERLING, Bernhard, 97273 Kürnach (DE); MANGER, Alexander, 97508 Grettstadt (DE); TRAUT, Michael, 97493 Bergrheinfeld (DE)
(86) Internationale Anmeldenummer: PCT/EP2015/056833
(87) Internationale Veröffentlichungsnummer: WO 2015/165671

(56) Entgegenhaltungen:
- WO-A1-2014/009122
- DE-A1-102014 214 316
- FR-A1- 2 852 649
- FR-A1- 2 996 893

## Beschreibung

Ausführungsbeispiele beziehen sich auf eine Schwingungsdämpfereinheit, die beispielsweise im Rahmen eines Antriebsstranges eines Kraftfahrzeugs, beispielsweise eines Kraftfahrzeugs mit einem Verbrennungsmotor, eingesetzt werden kann.

Im Bereich des Kraftfahrzeugbaus, aber auch in anderen Bereichen des Maschinen- und Anlagenbaus werden Schwingungsdämpfereinheiten oder Dämpferanordnungen eingesetzt, die zur Dämpfung wenigstens eines Schwingungsanteils einer Drehbewegung und gegebenenfalls zur Übertragung eines Drehmoments der Drehbewegung verwendet werden. So werden entsprechende Dämpferanordnungen beispielsweise im Bereich des Fahrzeugbaus im Rahmen von Antriebssträngen von Kraftfahrzeugen eingesetzt, bei denen es beispielsweise konzeptionsbedingt zu Abweichungen von einer gleichmäßigen oder gleichförmigen Drehbewegung kommen kann.

Im Falle eines Antriebsstrangs eines Kraftfahrzeugs können entsprechende Abweichungen von einer gleichmäßigen oder gleichförmigen Drehbewegung beispielsweise durch eine Entfaltungscharakteristik des Drehmoments eines Verbrennungsmotors hervorgerufen werden. Um diese von nachfolgenden Komponenten, beispielsweise einem Getriebe, einem Differenzial oder anderen entsprechenden Komponenten eines Antriebsstrangs zu entkoppeln, zumindest jedoch zu dämpfen, werden dort Dämpferanordnungen zum Einsatz gebracht.

Bei Schwingungsdämpfereinheiten können aus unterschiedlichen Gründen Axialkräfte auftreten. Solche Axialkräfte können Folgen unterschiedlicher Ursachen sein. Beispielsweise können Axialkräfte über einen Motor oder über ein Getriebe, welche mit der Schwingungsdämpfereinheit gekoppelt sind, in die Schwingungsdämpfereinheit eingetragen werden. In manchen Fällen können diese Axialkräfte zu einem sogenannten Taumeln einzelner Bauteile der Schwingungsdämpfereinheit führen.

Solche Drehschwingungsdämpfer sind beispielsweise in der DE 101 18 821 A1 beschrieben. Bei den dort beschriebenen Schwingungsdämpfereinheiten wird ein Torsionsschwingungsdämpfer verwendet, der ein antriebsseitiges und ein axial steifes abtriebsseitiges Übertragungselement umfasst, welche über eine Energiespeichereinrichtung oder ein Federelement gegeneinander verdrehbar sind. Die Energiespeichereinrichtung ist in einem radialen Abstand von einer Mittelachse der Übertragungselemente angeordnet. Die Übertragungselemente stehen über eine axial elastische Kopplungsvorrichtung miteinander in Wirkverbindung. Damit kann eine ausreichende Entkopplung, beispielsweise einer Motorschwingung, von einem nachfolgenden Antriebsstrang aber nur unzureichend ermöglicht werden.

Eine Schwingungsdämpfereinheit gemäß dem Oberbegriff von Patentanspruch 1 ist in der FR 2 852 649 A1 beschrieben.

Im Bereich entsprechender Dämpferanordnungen treten zu der grundsätzlichen Herausforderung, eine Dämpfung wenigstens eines Schwingungsanteils einer Drehbewegung zu realisieren, häufig eine Vielzahl weiterer Randbedingungen auf hinsichtlich Konstruktion, Funktion und anderer Parameter. So besteht beispielsweise ein Bedarf daran, einen Kompromiss zwischen Bauraum, auftretender Reibung, einfacher Herstellbarkeit und anderer Parameter einer Dämpferanordnung zu verbessern. Diesem Bedarf trägt eine Schwingungsdämpfereinheit gemäß Patentanspruch 1 Rechnung.

Eine Schwingungsdämpfereinheit gemäß einem Ausführungsbeispiel, beispielsweise für einen Antriebsstrang eines Kraftfahrzeugs, umfasst einen Torsionsdämpfer, der wenigstens eine Primärseite und wenigstens eine Sekundärseite aufweist, zwischen die wenigstens ein Federelement derart gekoppelt ist, sodass eine Drehmomentübertragung von der Primärseite zu der Sekundärseite über das wenigstens eine Federelement erfolgt. Die Schwingungsdämpfereinheit umfasst ferner einen Tilgerschwingungsdämpfer, der wenigstens eine Tilgermasse und wenigstens eine Führungsstruktur umfasst, wobei die Führungsstruktur ausgebildet ist, um die wenigstens eine Tilgermasse beweglich zu führen, um einen Schwingungsanteil einer Drehbewegung zu dämpfen. Die Schwingungsdämpfereinheit umfasst auch eine Taumelentkopplungsstruktur, die ausgebildet ist, um die Führungsstruktur in axialer Richtung beweglich und drehfest oder verdrehwinkelunbeschränkt mit einer Abtriebsseite der Schwingungsdämpfereinheit zu verbinden.

Dadurch, dass die Schwingungsdämpfereinheit die Taumelentkopplungsstruktur umfasst, mit der die wenigstens eine Führungsstruktur in axialer Richtung beweglich und drehfest und/oder verdrehwinkelunbeschränkt mit der Abtriebsseite der Schwingungsdämpfereinheit verbunden ist, kann bei manchen Ausführungsbeispielen eine Funktion der Schwingungsdämpfereinheit verbessert werden. Dies kann beispielsweise möglich sein, weil auftretende Störgrößen, beispielsweise Axialkräfte oder Axialpulse zumindest reduziert und möglichst minimiert werden können. Solche Axialkräfte können unter Umständen zu einer Fehlpositionierung des Tilgerschwingungsdämpfers führen. Es ist also unter Umständen möglich, eine Fehlpositionierung des Tilgerschwingungsdämpfers zu seiner eigenen Drehachse zumindest zu reduzieren oder sogar zu vermeiden. Beispielsweise kann die Schwingungsdämpfereinheit oder zumindest der Tilgerschwingungsdämpfer dadurch für Störungen, beispielsweise von einer Abtriebsseite, die auch als Abtrieb bezeichnet werden kann, unempfindlich gemacht werden bzw. eine Empfindlichkeit reduziert werden. Da durch die Taumelentkopplung also eventuell auch Axialkräfte, die zwischen der wenigstens einen Tilgermasse und der wenigstens einen Führungsstruktur auftreten können, reduziert oder sogar eliminiert werden können, kann bei manchen Ausführungsbeispielen eine Reibung bei einem beweglichen Führen der wenigstens einen Tilgermasse an der Führungsstruktur ebenfalls zumindest reduziert werden.

Eine verdrehwinkelunbeschränkte Verbindung der des Tilgerschwingungsdämpfers oder dessen Führungsstruktur mit der Abtriebsseite kann beispielsweise über eine Kupplung, beispielsweise eine Reibkupplung erfolgen. Eine verdrehwinkelunbeschränkte Verbindung kann sich beispielsweise von der Verbindung einer Primärseite mit der Sekundärseite eines Torsionsdämpfers unterscheiden, da diese über ein Federelement gekoppelt sind und nur um einen bestimmten Verdrehwinkel zueinander verdreht werden können. Beispielsweise kann eine Kupplung eine verdrehwinkelunbeschränkte Verbindung darstellen.

Die Abtriebsseite ist dabei eine Abtriebsnabe der Schwingungsdämpfereinheit. So kann eine Entkopplung der über die Abtriebsnabe eingebrachten Axialkräfte ermöglicht werden. Die Abtriebsnabe kann beispielsweise eine nach radial innen gerichtete Gerad- oder Schrägverzahnung aufweisen.

Die Taumelentkopplungsstruktur umfasst wenigstens ein erstes und ein zweites Teilentkopplungsbauteil, wobei die Abtriebsnabe in axialer Richtung zwischen den beiden Teilentkopplungsbauteilen angeordnet ist. So kann über eine Anlage wenigstens eines der Teilentkopplungsbauteile an der Abtriebsnabe in axialer Richtung ein Axialanschlag der Taumelentkopplungsstruktur bewirkt werden bzw. eine Bewegung des Tilgerschwingungsdämpfers in eine axiale Richtung begrenz werden. Ein Teilentkopplungsbauteil kann zum Beispiel ein Bauteil sein, das in eine axiale Richtung elastische und/oder verformbar ist. Optional kann die Taumelentkopplungsstruktur auch nur ein Entkopplungsbauteil oder ein Teilentkopplungsbauteil aufweisen. Das Teilentkopplungsbauteil oder die Taumelentkopplungsstruktur können beispielsweise ein Federblech, eine Blattfeder, eine Axialblattfeder oder ein anderes Federelement sein. Selbstverständlich können anstelle der hier aufgezählten Taumelentkopplungsstrukturen oder Federelemente für die Taumelentkopplungsstruktur zur Verbindung der Führungsstruktur mit der Abtriebsseite auch andersartig ausgeführte Federbauteile oder elastische Komponenten, die eine taumelweiche, aber drehfeste Anbindung ermöglichen können, zum Einsatz kommen.

Das erste Teilentkopplungsbauteil ist über wenigstens eine Abtriebsbefestigungsstruktur an der Abtriebsseite oder der Abtriebsnabe befestigt. Das zweite Teilentkopplungsbauteil weist wenigstens eine Abtriebsbefestigungsaufnahme auf, die ausgebildet ist, um die wenigstens eine Abtriebsbefestigungsstruktur des ersten Teilentkopplungsbauteils aufzunehmen. So kann ein Bauraum für die Schwingungsdämpfereinheit, insbesondere ein Bauraum der Taumelentkopplungsstruktur reduziert sein. Bei manchen Ausführungsbeispielen kann dazu die zweite Teilentkopplungsstruktur eine Ausnehmung oder eine Durchgangsöffnung umfassen, die zumindest in radialer Richtung eine größere Ausdehnung aufweist als die Abtriebsbefestigungsstruktur. Die Abtriebsbefestigungsstruktur kann dann das zweite Teilentkopplungsbauteil in axialer Richtung zumindest teilweise kontaktfrei überlappen. Dies kann beispielsweise so erfolgen, dass die zweite Teilentkopplungsstruktur nicht an der ersten Teilentkopplungsstruktur fixiert oder mit dieser verbunden ist. Beispielsweise kann die Abtriebsbefestigungsaufnahme auch als Durchgangsöffnung in der zweiten Teilentkopplungsstruktur ausgebildet sein, durch die die Abtriebsbefestigungsstruktur des ersten Teilentkopplungsbauteils hindurchragen kann.

Bei manchen Ausführungsbeispielen ist, um die Tilgermassen oder den Tilgerschwingungsdämpfer wie beschrieben mit der Abtriebsseite der Schwingungsdämpfereinheit zu verbinden, die Taumelentkopplungsstruktur direkt mit der wenigstens einen Führungsstruktur verbunden. Bei manchen Ausführungsbeispielen können so weitere Komponenten entfallen, um eine taumelweiche Entkopplung zu erreichen.

Bei manchen Ausführungsbeispielen umfasst der Tilgerschwingungsdämpfer ergänzend oder alternativ wenigstens zwei Führungsstrukturen, die in axialer Richtung gegenüberliegend angeordnet sind, um die wenigstens eine Tilgermasse beweglich zu führen. Bei solchen Ausführungsbeispielen kann die Taumelentkopplungsstruktur in axialer Richtung nur mit einer der Führungsstrukturen verbunden sein und/oder an dieser anliegen. Bei manchen Ausführungsbeispielen können so weitere Bauteile oder Komponenten zur Verbindung der zweiten Führungsstruktur mit der Taumelentkopplungsstruktur entfallen.

Die Taumelentkopplungsstruktur kann bei manchen Ausführungsbeispielen in radialer Richtung steif sein bzw. angeordnet und/oder ausgebildet sein, um den Tilgerschwingungsdämpfer bzw. dessen Führungsstruktur in radialer Richtung fixiert zu der Abtriebsseite zu verbinden.

Bei einigen weiteren Ausführungsbeispielen umfasst die Abtriebsnabe einen Abtriebsnabenflansch, der wenigstens in einem Durchmesserbereich, in dem das erste Teilentkopplungsbauteil oder die Taumelentkopplungsstruktur mit wenigstens einer Abtriebsbefestigungsstruktur an der Abtriebsnabe befestigt ist, eine geringere Ausdehnung in eine axiale Richtung aufweist, als in einem radial weiter innenliegenden Bereich des Abtriebsnabenflansches. Bei manchen Ausführungsbeispielen kann so ein Bauraum in axialer Richtung reduziert sein, weil in einem Bereich, in dem sich die Taumelentkopplungsstruktur bzw. die Teilentkopplungsbauteile und die Abtriebsnabe bzw. der Abtriebsnabenflansch in axialer Richtung überlappen, der Abtriebsnabenflansch eine reduzierte axiale Ausdehnung aufweist.

Ergänzend oder alternativ ist das erste Teilentkopplungsbauteil bei manchen Ausführungsbeispielen über wenigstens zwei Abtriebsbefestigungsstrukturen an der Abtriebsnabe befestigt, wobei die beiden Abtriebsbefestigungsstrukturen im Wesentlichen in radialer Richtung gegenüberliegend zueinander angeordnet sind. Bei Ausführungsbeispielen, bei denen die Abtriebsnabe einen Abtriebsnabenflansch aufweist, kann die erste Teilentkopplungsstruktur auch entsprechend an dem Abtriebsnabenflansch befestigt sein. Bei manchen Ausführungsbeispielen kann so eine symmetrische Drehmomentübertragung ermöglicht werden. Beispielsweise kann auch das zweite Teilentkopplungsbauteil analog zu dem ersten Teilentkopplungsbauteil mit der Abtriebsnabe oder dem Abtriebsnabenflansch verbunden sein. Bei manchen Ausführungsbeispielen kann das erste Teilentkopplungsbauteil nur an zwei, im Wesentlichen gegenüberliegend zueinander angeordneten Bereichen miteinander verbunden sein. Optional kann das erste Teilentkopplungsbauteil auch über eine Mehrzahl von Abtriebsbefestigungsstrukturen an der Abtriebsnabe oder dem Abtriebsnabenflansch befestigt sein.

Bei einigen weiteren Ausführungsbeispielen umfasst der Abtriebsnabenflansch ergänzend oder alternativ eine Mehrzahl von Flügeln, die in Umfangsrichtung voneinander beabstandet sind. Die Flügel weisen in radialer Richtung eine größere Ausdehnung auf, als Bereiche des Abtriebsnabenflansches, die in Umfangsrichtung zwischen den Flügeln liegen. Bei manchen Ausführungsbeispielen kann so in den Bereichen zwischen den Flügeln, Platz für die Befestigung der Taumelentkopplungsstruktur oder der Teilentkopplungsbauteile mit dem Tilgerschwingungsdämpfer bzw. dessen Führungsstruktur vorhanden sein. Unter Umständen können die Flügel in axiale Richtung eine geringere Ausdehnung aufweisen, als radial weiter innenliegende Bereiche des Abtriebsnabenflansches. Bei anderen Ausführungsbeispielen können die Flügel entlang ihrer radialen Ausdehnung eine in axialer Richtung gleiche Ausdehnung aufweisen.

Bei manchen Ausführungsbeispielen ist ergänzend oder alternativ wenigstens eines der Teilentkopplungsbauteile an sich im Wesentlichen gegenüberliegenden Flügeln befestigt. Bei manchen Ausführungsbeispielen können dann Flügel, die zwischen diesen gegenüberliegenden Flügeln liegen, zur Befestigung des zweiten Teilentkopplungsbauteils dienen. Bei manchen Ausführungsbeispielen kann der Abtriebsnabenflansch zwei, vier, sechs, acht oder noch eine andere Anzahl von Flügeln umfassen. Bei manchen Ausführungsbeispielen kann der Abtriebsnabenflansch auch eine ungerade Anzahl von Flügeln umfassen.

Ergänzend oder alternativ ist das zweite Teilentkopplungsbauteil bei manchen Ausführungsbeispielen um einen Winkel, von im Wesentlichen 90°, versetzt zu dem ersten Teilentkopplungsbauteil befestigt. Bei manchen Ausführungsbeispielen kann so ein Bauraum für die Teilentkopplungsstruktur reduziert sein, weil beispielsweise unterschiedliche Befestigungsstrukturen oder Befestigungsbereiche in Umfangsrichtung abwechselnd zueinander angeordnet sein können. Die versetzte Befestigung der beiden Teilentkopplungsstrukturen zueinander, kann sich dabei beispielsweise auf die Befestigung an dem Tilgerschwingungsdämpfer bzw. dessen Führungsstruktur und/oder auch auf die Befestigung an der Abtriebsnabe oder an dem Abtriebsnabenflansch beziehen. Ein Winkel von im Wesentlichen 90° kann dabei, beispielsweise im Rahmen von Montage- und/oder Fertigungstoleranzen oder aus anderen Gründen, um einen Winkel von 0°, 1°, 5°, 10°, 15° in beide Richtungen von einem 90°-Winkel abweichen. Bei manchen Ausführungsbeispielen ist das erste Teilentkopplungsbauteil baugleich zu dem zweiten Teilentkopplungsbauteil ausgebildet.

Ergänzend oder alternativ ist die Taumelentkopplungsstruktur bei manchen Ausführungsbeispielen ausgebildet, um eine axiale Bewegung der wenigstens einen Tilgermasse um einen Wert zwischen 0,1 mm und 1,5 mm, beispielsweise 0,7 mm oder 1 mm, zuzulassen. Bei manchen Ausführungsbeispielen kann so eine ausreichende Taumelentkopplung unter Ausnutzung eines zur Verfügung stehenden Bauraums erreicht werden. Beispielsweise kann die axiale Bewegung, ausgehend von einer neutralen oder unausgelenkten Position, in beide Richtungen erfolgen.

Ergänzend oder alternativ weist die wenigstens eine Führungsstruktur bei manchen Ausführungsbeispielen wenigstens einen Taumelentkopplungsanbindungsvorsprung auf, an dem die Taumelentkopplungsstruktur mit der wenigstens einen Führungsstruktur verbunden ist. Bei manchen Ausführungsbeispielen kann so ein Bauraum, beispielsweise in axialer Richtung, reduziert sein, weil der in Umfangsrichtung zu dem Taumelentkopplungsanbindungsvorsprung benachbarte Raum zur Aufnahme anderer Bauteile dienen kann. Bei manchen Ausführungsbeispielen kann die Führungsstruktur eine Mehrzahl, von in Umfangsrichtung voneinander beabstandeter, Taumelentkopplungsanbindungsvorsprüngen aufweisen. Die Bereiche der Führungsstruktur, die zwischen den Taumelentkopplungsanbindungsvorsprüngen liegen, sind in radialer Richtung gegenüber den Taumelentkopplungsanbindungsvorsprüngen zurückgestellt. Bei manchen Ausführungsbeispielen kann so auch ein Gewicht der Schwingungsdämpfereinheit reduziert sein, weil die zur Verbindung nicht benötigten Bereiche Material freigestellt sind.

Ergänzend oder alternativ umfasst die Schwingungsdämpfereinheit bei manchen Ausführungsbeispielen einen Abstandshalter, der in axialer Richtung zwischen der wenigstens einen Führungsstruktur und der Taumelentkopplungsstruktur oder zwischen der Führungsstruktur und wenigstens einer der Teilentkopplungsbauteile angeordnet ist. Durch den Abstandshalter kann bei manchen Ausführungsbeispielen eine unterschiedliche Ausdehnung in axialer Richtung der Taumelentkopplungsstruktur oder des Teilentkopplungsbauteils und der axialen Ausdehnung des Abtriebsnabenflansches ausgeglichen werden.

Ergänzend oder alternativ sind bei manchen Ausführungsbeispielen der Tilgerschwingungsdämpfer und der Torsionsdämpfer taumelfest miteinander verbunden. So kann bei manchen Ausführungsbeispielen auch eine Taumelentkopplung des Torsionsdämpfers oder zumindest dessen Sekundärseite, mitbewirkt werden. Eine taumelfeste Verbindung zwischen dem Tilgerschwingungsdämpfer und dem Torsionsdämpfer kann beispielsweise eine axiale Bewegung zwischen der Sekundärseite des Torsionsdämpfers und dem Tilgerschwingungsdämpfer bzw. dessen Führungsbauteil ausschließen.

Weitere vorteilhafte Ausgestaltungen werden nachfolgend anhand von in den Zeichnungen dargestellten Ausführungsbeispielen, auf welche Ausführungsbeispiele jedoch nicht beschränkt sind, näher beschrieben.
Fig. 1a zeigt eine schematische Darstellung eines Teilaufrisses einer Aufsicht einer Schwingungsdämpfereinheit gemäß einem Ausführungsbeispiel;
Fig. 1b zeigt eine schematische Querschnittsdarstellung durch die in Fig. 1a gezeigte Schwingungsdämpfereinheit entlang einer Schnittebene A-A;
Fig. 1c zeigt eine schematische Prinzipdarstellung einer Schwingungsdämpfereinheit gemäß dem Ausführungsbeispiel der Figuren 1a und 1b;
Fig. 1d zeigt eine weitere schematisch Prinzipdarstellung einer Taumelentkopplungsstruktur;
Fig. 2a zeigt eine schematische Darstellung einer Aufsicht eines Tilgerschwingungsdämpfers der Schwingungsdämpfereinheit gemäß dem Ausführungsbeispiel der Fig. 1a und 1b;
Fig. 2b zeigt eine schematische Querschnittsdarstellung durch den in Fig. 2a gezeigten Tilgerschwingungsdämpfer der Schwingungsdämpfereinheit entlang einer Schnittebene R-R;
Fig. 2c zeigt eine schematische Querschnittsdarstellung durch den in Fig. 2a gezeigten Tilgerschwingungsdämpfer der Schwingungsdämpfereinheit entlang einer Schnittebene C-C;
Fig. 2d zeigt eine schematische Querschnittsdarstellung durch den in Fig. 2a gezeigten Tilgerschwingungsdämpfer der Schwingungsdämpfereinheit entlang einer Schnittebene A-A;
Fig. 2e zeigt eine schematische Darstellung einer perspektivischen Ansicht des Tilgerschwingungsdämpfers der Schwingungsdämpfereinheit nach dem Ausführungsbeispiel der Fig. 2a bis 2d;
Fig. 2f zeigt eine schematische Darstellung einer Kräftezerlegung an einem Tilgerschwingungsdämpfer bei einem Planlauffehler.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

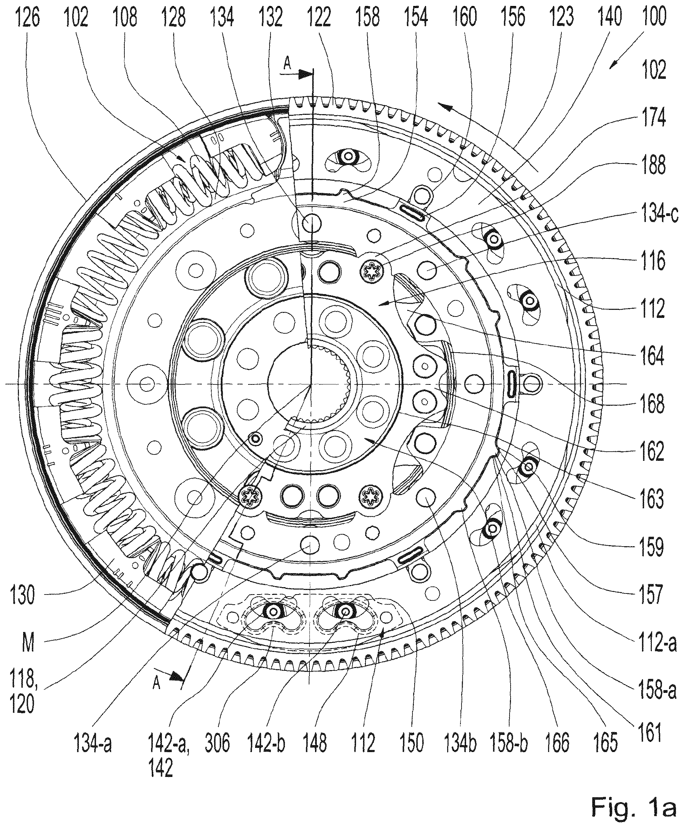

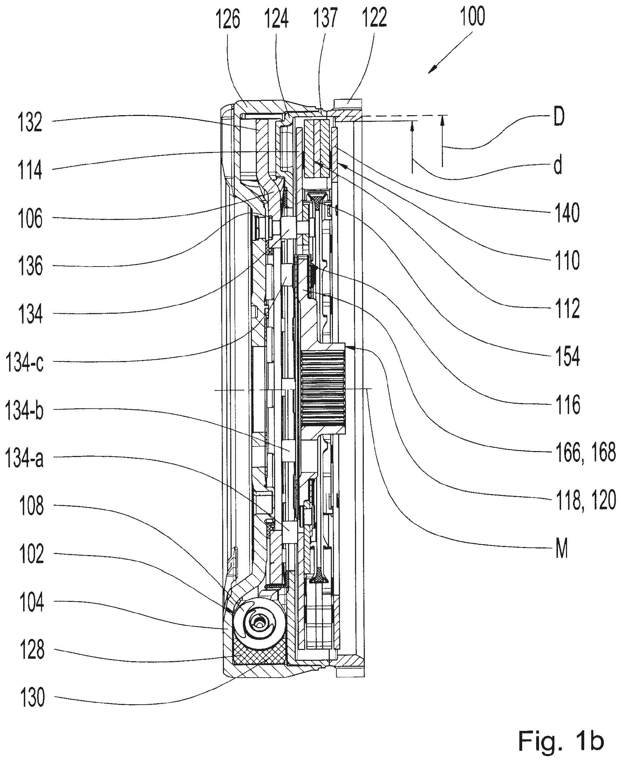

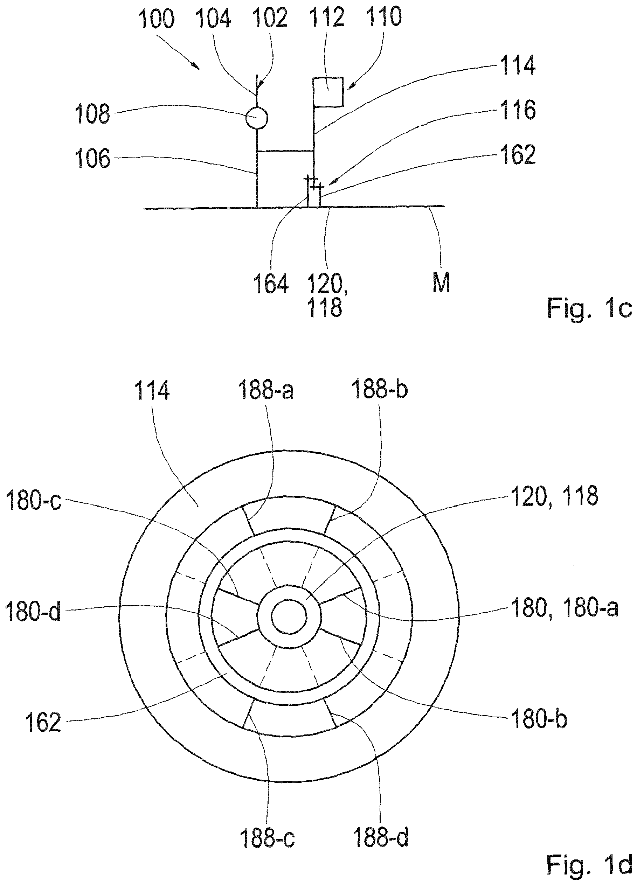

Die Fig. 1a und 1b zeigen unterschiedliche Ansichten einer Schwingungsdämpfereinheit 100, beispielsweise für einen nicht dargestellten Antriebsstrang eines Kraftfahrzeugs. Wie anhand der schematischen Systemdarstellung der Fig. 1c erkennbar, umfasst die Schwingungsdämpfereinheit 100 einen Torsionsdämpfer 102, der wenigstens eine Primärseite 104 und wenigstens eine Sekundärseite 106 aufweist, zwischen die wenigstens ein Federelement 108 derart gekoppelt ist, sodass eine Drehmomentübertragung von der Primärseite 104 zu der Sekundärseite 106 über das wenigstens eine Federelement 108 erfolgt.

Ferner umfasst die Schwingungsdämpfereinheit 100 einen Tilgerschwingungsdämpfer 110, der wenigstens eine Tilgermasse 112 und wenigstens einen Tilgerträger 114umfasst, welcher auch als Führungsstruktur 114 bezeichnet werden kann, wobei der Tilgerträger 114 ausgebildet ist, um die wenigstens eine Tilgermasse 112 beweglich zu führen, um einen Schwingungsanteil einer Drehbewegung zu dämpfen. Bei dem Tilgerschwingungsdämpfer 110 erfolgt das Dämpfen der Schwingungen also durch die wenigstens eine Tilgermasse 112 als Dämpferelement, welches kein Drehmoment überträgt.

Des Weiteren umfasst die Schwingungsdämpfereinheit 100, welche auch als Schwungrad mit einem Torsionsdämpfer bezeichnet werden kann, auch eine Taumelentkopplungsstruktur 116, die ausgebildet ist, um die wenigstens eine Führungsstruktur 114 in axialer Richtung M beweglich und drehfest und/oder verdrehwinkelunbeschränkt mit einer Abtriebsseite 118, die bei dem Ausführungsbeispiel der Fig. 1a bis 2e als Abtriebsnabe 120 ausgebildet ist, der Schwingungsdämpfereinheit 100 zu verbinden.

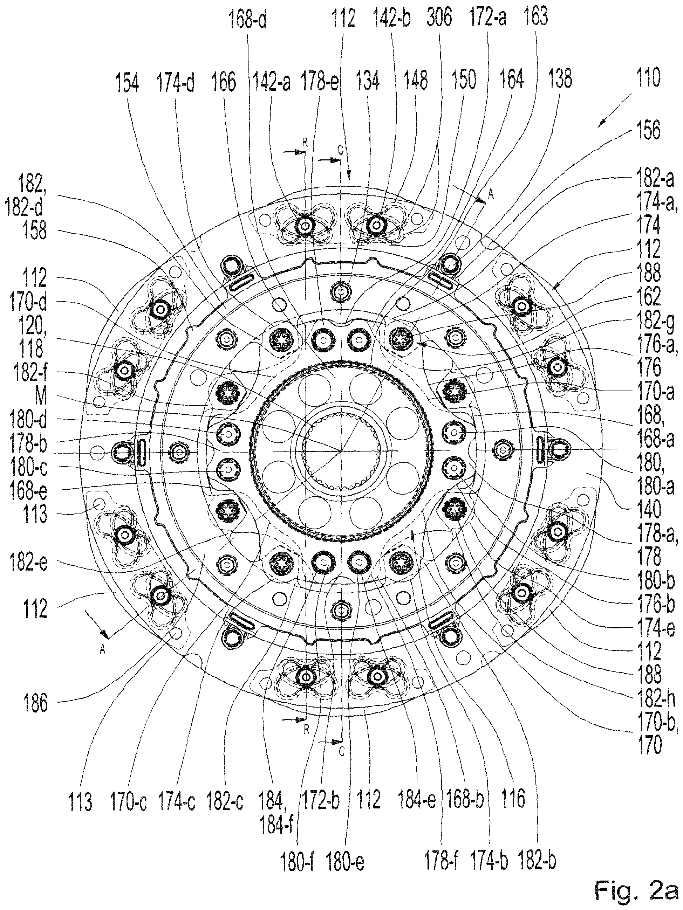

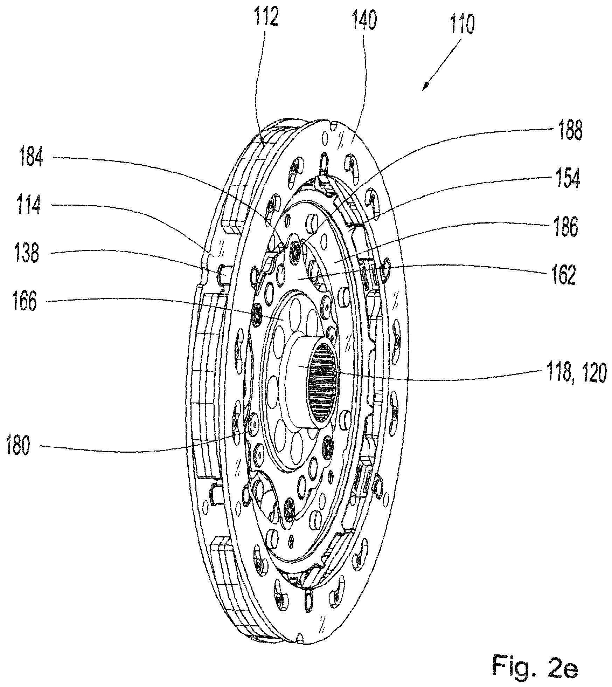

Die Fig. 1c und 1d zeigen schematische Prinzipdarstellungen der Taumelentkopplungsstruktur 116. Die Taumelentkopplungsstruktur 116 umfasst ein erstes Teilentkopplungsbauteil 162 und ein zweites Teilentkopplungsbauteil 164 welche beispielsweise jeweils als Axialblattfeder, Federblech oder als ein anderes Federelement ausgebildet sein können. Die beiden Teilentkopplungsbauteile sind 162 und 164 sind jeweils mit der Führungsstruktur 114 und der Abtriebsseite 180 bzw. der Abtriebsnabe 120 verbunden sind. In Fig. 1d ist aus Gründen der Übersichtlichkeit nur das Teilentkopplungsbauteil 162 dargestellt. Diese ist mittels vier Befestigungsstrukturen 188 bzw. 188-a bis 188-d an der Führungsstruktur 114 bzw. dem Tilgerträger 114 befestigt. Dabei sind jeweils zwei der Befestigungsstrukturen 188-a und 188-b innerhalb eines kleineren Winkles als die Befestigungsstrukturen 188-a und 188-c angeordnet. Die beiden anderen Befestigungsstrukturen 188-c und 188-d sind im Wesentlichen in radialer Richtung gegenüberliegend zu den Befestigungsstrukturen 188-a und 188-b angeordnet. Analog ist das Teilentkopplungsbauteil 162 auch mit vier Befestigungsstrukturen 180-a bis 180-d an der Abtriebsseite 118 bzw. der Abtriebsnabe 120 befestigt. Allerdings erfolgt die Befestigung jeweils um einen Winkel, von ca. 90° versetzt zu der Befestigung an der Führungsstruktur. Dabei schließen auch die Befestigungsstrukturen 180-a und 180-b einen kleineren Winkel ein, als die Befestigungsstrukturen 180-a und 180-c. Die Befestigungsstrukturen 180-c und 180-d sind im Wesentlichen in radialer Richtung gegenüberliegend zu den Befestigungsstrukturen 180-a und 180-b angeordnet. Lediglich strichliniert, sind die Positionen dargestellt, an denen sich die Befestigungsstrukturen des zweiten Teilentkopplungsbauteils 164 befinden, das im Wesentlichen um einen Winkel von 90° versetzt zu dem ersten Teilentkopplungsbauteil 162 angeordnet wird. Eine nähere Beschreibung der Taumelentkopplungsstruktur 116 erfolgt anhand der Fig. 2a bis 2e.

Die Tilgermasse 112 kann beispielsweise eine Mehrzahl, in axialer Richtung M zueinander benachbart angeordneter Einzeltilgermassen umfassen. Diese können jeweils über wenigstens einen Niet 113, welcher auch als Tilgermassenbefestigungsstruktur 113 bezeichnet werden kann, miteinander verbunden sein. Bei weiteren, nicht dargestellten Ausführungsbeispielen kann die Tilgermasse auch auf andere Art und Weise, beispielsweise einteilig, ausgebildet sein. Bei dem Ausführungsbeispiel umfasst der Tilgerschwingungsdämpfer 110 sechs Tilgermassen 112. Bei einigen weiteren, nicht dargestellten Tilgerschwingungsdämpfern kann auch eine andere Anzahl von Tilgermassen eingesetzt werden.

Bei der Schwingungsdämpfereinheit 100 wird ein Drehmoment über einen Zahnkranz 122 in eine durch den Pfeil 123 angegebene Drehrichtung auf die Primärseite 104 des Torsionsdämpfers 102 geleitet. Dazu ist der Zahnkranz 122 mit einem Deckbauteil 124 des Torsionsdämpfers 102 drehfest verbunden. Das Deckbauteil 124 ist mit einer Gehäuseschale 126 des Torsionsdämpfers 102 verbunden und begrenzt mit einem radial außenliegenden Bereich der Gehäuseschale 126 einen Federbereich 128 zur Aufnahme des Federelements 108. In dem Federbereich 128 ist, wie in der Fig. 1a erkennbar, in Umfangsrichtung eine Mehrzahl von Federelementen 108 angeordnet. Über die Primärseite 104 wird ein Federelementansteuerschuh 130 angesteuert, der in dem Federbereich 128 aufgenommen und ein Drehmoment auf das wenigstens eine Federelement 108 überträgt. Über das Federelement 108 wird das Drehmoment an einen Federansteuersteg 132 der Sekundärseite 106 übertragen. Die Sekundärseite 106 ist über wenigstens einen Niet 134, der auch als Befestigungsstruktur 134 bezeichnet werden kann, taumelfest mit dem Tilgerschwingungsdämpfer 110 bzw. dessen Tilgerträger 114 verbunden. Bei einigen weiteren, nicht dargestellten Ausführungsbeispielen kann der Niet auch als Abstandshülse, Distanzniet, Abstandsbolzen oder dergleichen ausgebildet sei. Die Sekundärseite 106 weist eine Durchgangsöffnung auf, durch die die Befestigungsstruktur 134 geführt ist. Konzentrisch zu der Durchgangsöffnung befindet sich eine Senkung 136, in der ein Kopf der Befestigungsstruktur 134 versenkt ist. In Umfangsrichtung ist die Sekundärseite 106 über eine Mehrzahl von solchen Befestigungsstrukturen 134 mit dem Tilgerschwingungsdämpfer 110 verbunden. Beispielsweise sind in den Fig. 1a und 1b weitere Befestigungsstrukturen 134-a bis 134-c erkennbar.

Von dem Tilgerträger 114 wird das Drehmoment über die Taumelentkopplungsstruktur 116 auf die Abtriebsnabe 120 übertragen. Die Abtriebsnabe 120 weist eine Innenverzahnung auf. Dabei handelt es sich um eine Geradverzahnung. Über die Abtriebsnabe 120 wird das Drehmoment auf eine nicht dargestellte Abtriebswelle übertragen.

Der Zahnkranz 122 weist einen Innendurchmesser d auf, der kleiner ist, als ein Innendurchmesser D eines sich in eine axiale Richtung erstreckenden Befestigungsabschnitts 137 des Deckbauteils 124. Der Befestigungsabschnitt 137 begrenzt dabei einen Hüllraum in eine radiale Richtung, in dem sich die wenigstens eine Tilgermasse 112 in einem ausgelenkten Zustand bewegen kann. Die Tilgermasse 112 nimmt in einem ausgelenkten Zustand also einen größeren Durchmesser D ein, als ein Innendurchmesser des Zahnkranzes 122. Zur Montage durch den Zahnkranz 122 kann die wenigstens eine Tilgermasse 112 nach radial innen in dem Tilgerschwingungsdämpfer 110 versenkt werden.

Die Fig. 2a bis 2e zeigen unterschiedliche schematische Darstellungen des Tilgerschwingungsdämpfers 110, welcher auch als Tilger oder drehzahladaptiver Tilger bezeichnet werden kann. Der Tilgerträger 114, der beispielsweise auch als Bahnblech ausgebildet sein kann, ist über einen Niet 138, der auch als Befestigungsstruktur 138 bezeichnet werden kann, mit einem zweiten Tilgerträger 140 verbunden, die in axialer Richtung gegenüberliegend zu dem ersten Tilgerträger 114 angeordnet ist. Eventuell kann statt des Niets auch ein Abstandsstückbolzen, Distanzniet oder dergleichen eingesetzt werden. Auch der zweite Tilgerträger 140 kann beispielsweise als Bahnblech ausgebildet sein. In axialer Richtung zwischen den Tilgerträgern 114 und 140 ist die wenigstens eine Tilgermasse 112, die auch als Energiespeicher oder Fliehgewicht bezeichnet werden kann, über einen Wälzkörper 142 geführt. Wie in Fig. 2a erkennbar, wird die Tilgermasse 112 über zwei Wälzkörper 142-a und 142-b zwischen den beiden Tilgerträgern 114 und 140 geführt.

Bei dem Wälzkörper 142 der Ausführungsbeispiele 2a bis 2e handelt es sich um eine sogenannte Stufenrolle, die Wälzflächen 144 und 146 mit unterschiedlichen Durchmessern aufweist. Die Wälzfläche 146 weist dabei einen kleineren Durchmesser als die Wälzfläche 144 auf. Die Tilgermasse 112 weist wenigstens eine Lauffläche 148 auf, in der der Wälzkörper 142 mit der Wälzfläche 144 abrollt. Ähnlich weisen auch die Tilgerträger 114 und 140 jeweils eine Lauffläche 150 auf, in der der Wälzkörper 142 mit der Wälzfläche 146 abrollt. Im Bereich der Laufflächen 148 und 150 befinden sich strichliniert dargestellte Freistellungen 306, welche zu einer Reibungsreduzierung zwischen den Wälzkörpern 124 mit der Tilgermasse 112 und den 114 und 140 dienen. Bei einigen weiteren, nicht dargestellten Ausführungsbeispielen können die Freistellungen auch entfallen.

An dem Tilgerträger 114 ist auch ein Stützkörper 154 befestigt. Der Stützkörper 154 kann bei manchen Ausführungsbeispielen als Kunststoffring ausgebildet sein. Der Stützkörper 154 ist konzentrisch zu einer Mittelachse M angeordnet und weist eine Mehrzahl von nach radial außen gerichteten Befestigungsaugen 156 auf. Diese sind C-förmig ausgebildet und greifen von radial innen jeweils um einen der Niete138. Die Tilgerträger 114 und 140 weisen, wie in Fig. 1a bei dem zweiten Tilgerträger 140 erkennbar, eine Prägestruktur 160 auf, gegen die sich der Stützkörper 154 mit seinem Befestigungsauge 156 abstützen kann. Der Stützkörper 154 weist eine Mehrzahl von Stützabschnitten 158 auf. Dabei sind jeweils zwei Stützabschnitte 158-a und 158-b, wie in Fig. 1a erkennbar, angeordnet, sodass sie mit einer Tilgermasse 112, beispielsweise der Tilgermasse 112-a in Kontakt kommen können. Die Stützabschnitte 158-a und 158-b sind symmetrisch zu einer gedachten Symmetrielinie, die sich in Umfangsrichtung mittig zwischen ihnen befindet, angeordnet und ausgebildet.

Stellvertretend wird im Folgenden der Stützabschnitt 158-a beschrieben. Der Stützabschnitt 185-a weist im Wesentlichen eine Trapezform auf. Dabei liegt einer der parallelen Schenkel 159, nämlich der längere, auf einer der Tilgermasse 112 abgewandten Seite des Stützabschnitts 185-a und schließt integral an einen Grundkörper des Stützkörpers 154 an bzw. befindet sich in diesem. Gegenüberliegend befindet sich ein kürzerer paralleler Schenkel 161, der der Tilgermasse 112 zugewandt ist. Der Schenkel 161 ist mit dem Grundkörper des Stützkörpers 154 über einen weiteren Schenkel 165 verbunden. Dabei liegt der Schenkel 165 auf einer dem Stützabschnitt 158-b zugewandten Seite. Der Schenkel 165 schließt über einen Radius an den Grundkörper des Stützkörpers 154 an. In Umfangsrichtung gegenüberliegend sind die Schenkel 159 und 161 mit einem weiteren Schenkel 157 verbunden. Dieser ist im Wesentlichen als Gerade ausgebildet und ohne Radius oder mit einem kleineren Radius als der Schenkel 165 mit dem Grundkörper des Stützkörpers 154 verbunden. Bei manchen Ausführungsbeispielen verlaufen die Schenkel 159 und 161 nicht parallel zueinander. Bei einigen weiteren, nicht dargestellten Ausführungsbeispielen kann der Stützkörper auch entfallen oder auf andere Art und Weise ausgebildet sein.

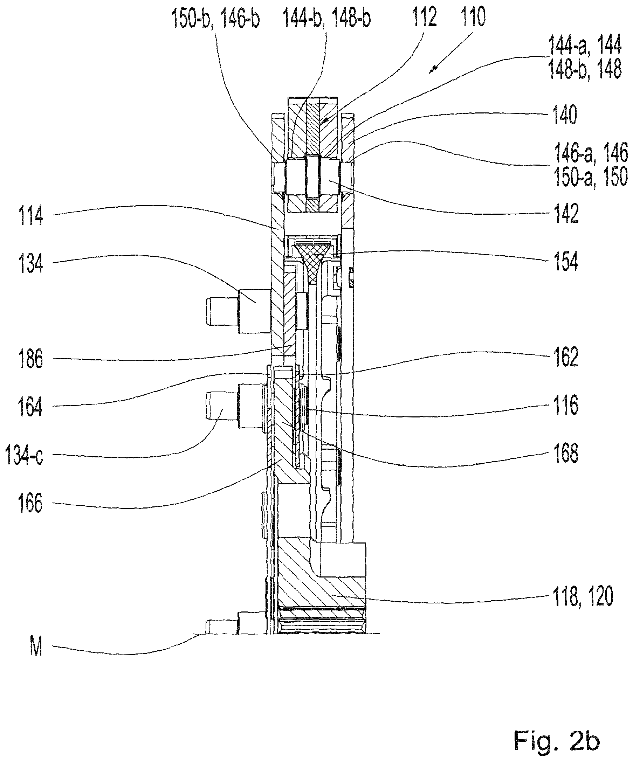

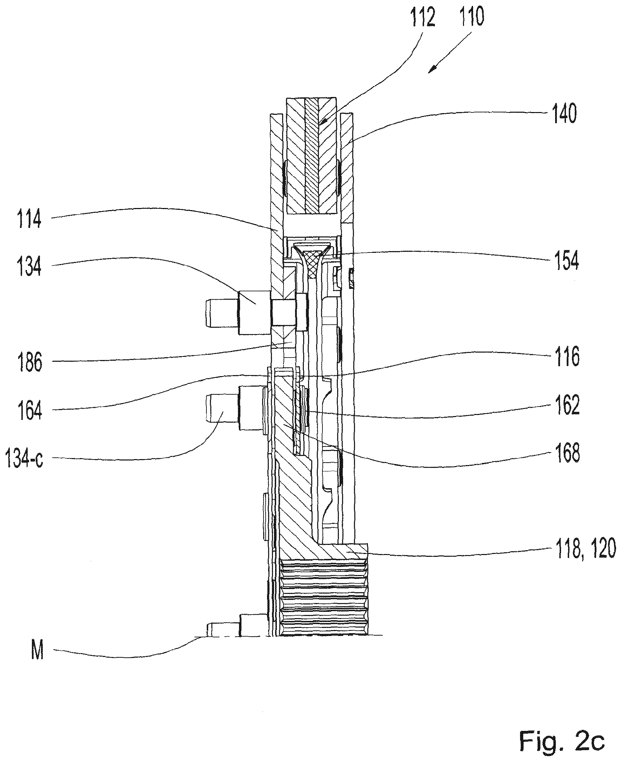

Die Taumelentkopplungsstruktur 116 bzw. die beiden Teilentkopplungsbauteile 162 und 164 stehen in axialer Richtung nur mit dem Tilgerträger 114 und nicht mit dem Tilgerträger 140 in Kontakt. Die beiden Teilentkopplungsbauteile 162 und 164 bzw. die Federelemente sind an einem Abtriebsnabenflansch 166 der Abtriebsnabe 120 und dem Tilgerträger 114 befestigt. Der Abtriebsnabenflansch 166 weist bei der Schwingungsdämpfereinheit 100 eine Mehrzahl von Flügeln 168 auf. Die vier Flügel 168-a bis 168-d sind, jeweils um einen Winkel von 90° zueinander versetzt, angeordnet. Die Flügel 168-a bis 168-d weisen nach radial außen eine größere Ausdehnung auf, als Bereiche 170-a bis 170-d, die jeweils zwischen zwei Flügeln 168-a bis 168-d liegen. Der Abtriebsnabenflansch 166 bzw. dessen Flügel 168-a bis 168-d weisen in axialer Richtung, wie beispielsweise in den Fig. 2b und 2c erkennbar, in einem radial außenliegenden Bereich eine geringere Ausdehnung in eine axiale Richtung auf, als der Abtriebsnabenflansch 166 in einem radial weiter innenliegenden Bereich.

Bei einigen weiteren, nicht dargestellten Ausführungsbeispielen kann der Abtriebsnabenflansch über seine gesamte Ausdehnung, auch im Bereich der Flügel, eine gleichmäßige Ausdehnung in eine axiale Richtung aufweisen. Bei den Bereichen der geringeren Ausdehnung in eine axiale Richtung kann es sich beispielsweise um einen Durchmesserbereich handeln, in dem wenigstens eines der Teilentkopplungsbauteile 162 und 164 mit dem Abtriebsnabenflansch 166 verbunden ist.

Die Teilentkopplungsbauteile 162 und 164 sind bei der Schwingungsdämpfereinheit 100 baugleich ausgebildet. Bei einigen weiteren, nicht dargestellten Ausführungsbeispielen kann die Taumelkopplungsstruktur auch nur ein Teilentkopplungsbauteil bzw. eine Axialblattfeder oder ein Federblech oder ein anderes Federelement umfassen. Optional können die Teilentkopplungsbauteile unterschiedliche Formen, Werkstoffe und/oder Eigenschaften aufweisen.

Da die Teilentkopplungsbauteile 162 und 164 baugleich ausgebildet sind, wird stellvertretend die Form des Teilentkopplungsbauteils 162 beschrieben. Wie in Fig. 2a erkennbar, weist das Teilentkopplungsbauteil 162 eine symmetrische Form auf. Symmetrielinie ist die Schnittlinie C-C.

Ausgehend von einem Führungsstrukturvorsprung 174-a, der zur Befestigung an dem Tilgerträger 114 dient, wird das Teilentkopplungsbauteil 162 im Uhrzeigersinn beschrieben. Das Teilentkopplungsbauteil 162 weist vier solcher Führungsstrukturvorsprünge 174-a bis 174-d auf. An den Führungsstrukturvorsprung 174-a schließt weiter in Umfangsrichtung ein konkav nach radial innen gewölbter Abschnitt 176-a.

An den konkav nach innen gewölbten Abschnitt 176 schließt ein sich wieder weiter nach radial außen erstreckender Flügelvorsprung 178-a an, der zur Befestigung an dem Flügel 168-a bzw. dem Abtriebsnabenflansch 166 dient. Weiter in Uhrzeigerrichtung schließt an dem Flügelvorsprung 178-a ein weiterer konkav nach innen gewölbter Abschnitt 176-b an, bis zu dem nächsten Führungsstrukturvorsprung 174-b. An den Führungsstrukturvorsprung 174-b schließt ein Abtriebsbefestigungsaufnahmeabschnitt 172-b an. Der Abtriebsbefestigungsaufnahmeabschnitt 172-b weist im Bereich der Symmetrielinie eine konkav nach innen gewölbte Ausnehmung auf. An den Abtriebsbefestigungsaufnahmeabschnitt 172-b schließt wieder ein Führungsstrukturvorsprung 174-c an. Links von der Symmetrielinie in der Fig. 2a ist das Teilentkopplungsbauteil 162 analog ausgebildet. Radial innen weist das Teilentkopplungsbauteil 162 eine Durchgangsöffnung 163 auf, mit der das Teilentkopplungsbauteil 162 konzentrisch zu der Drehachse M angeordnet ist. Die Durchgangsöffnung 163 weist dabei einen größeren Radius als die Abtriebsnabe 120 auf.

Das Teilentkopplungsbauteil 162 ist über eine Mehrzahl von Abtriebsbefestigungsstrukturen 180 an der Abtriebsnabe 120 bzw. dem Abtriebsnabenflansch 166 befestigt. Das Teilentkopplungsbauteil 162 ist mit zwei Abtriebsbefestigungsstrukturen 180-a und 180-b, die beispielsweise als Niet oder Abstandsbolzen oder andere Befestigungsmittel ausgebildet sein können, mit seinem Flügelvorsprung 178-a an dem Flügel 168-a befestigt. Im Wesentlichen in radialer Richtung gegenüberliegend ist das Teilentkopplungsbauteil 162 mit seinem Flügelvorsprung 178-b an dem Flügel 168-c mit den Abtriebsbefestigungsstrukturen 180-d und 180-c befestigt. Bei einigen weiteren, nicht dargestellten Ausführungsbeispielen kann auch pro Flügel nur eine Abtriebsbefestigungsstruktur angeordnet sein.

Mit seinen Führungsstrukturvorsprüngen 174-a bis 174-d ist das Teilentkopplungsbauteil 162 jeweils an dem Tilgerträger 114 und dadurch auch an dem Tilgerschwingungsdämpfer 110 befestigt. Der Tilgerträger 114 weist dazu vier Taumelentkopplungsanbindungsvorsprünge 182-a bis 182-d auf. Die Taumelentkopplungsanbindungsvorsprünge 182-a bis 182-d ragen weiter nach radial innen als eine durchschnittlich nach radial innen gerichtete Oberfläche des Tilgerträgers 114. Die Führungsstrukturvorsprünge 174-a bis 174-d sind dazu jeweils mit einem der Taumelentkopplungsanbindungsvorsprünge 182-a bis 182-d über einen Niet 188, der auch als Befestigungsstruktur 188 bezeichnet werden kann, vernietet. Der Tilgerträger 114 ist also mit dem zweiten Teilentkopplungsbauteil 162 vernietet.

Das zweite Teilentkopplungsbauteil 164 ist um 90° verdreht zu dem ersten Teilentkopplungsbauteil 162 angeordnet und befestigt, wobei die beiden Teilentkopplungsbauteile 162 und 164 den Abtriebsnabenflansch 166 in axialer Richtung zwischen Sich aufnehmen. Das zweite Teilentkopplungsbauteil 164 ist also mit seinen Flügelvorsprüngen 178-e und 178-f an dem Flügel 168-d und dem diesen gegenüberliegenden Flügel 168-b befestigt. Dazu werden, wie auch bei dem Teilentkopplungsbauteil 162 Abtriebsbefestigungsstrukturen 180 eingesetzt. An dem Flügel 168-b sind die Abtriebsbefestigungsstrukturen 180-e und 180-f erkennbar, mit denen das Teilentkopplungsbauteil 164, das auf einer dem Teilentkopplungsbauteil 162 abgewandten Seite des Abtriebsnabenflansches 166 angeordnet ist. Das Teilentkopplungsbauteil 162 weist in seinen Abtriebsbefestigungsaufnahmeabschnitten 172-a und 172-b jeweils zwei Abtriebsbefestigungsaufnahmen 184 auf. In dem Abtriebsbefestigungsaufnahmeabschnitt 172-b sind diese mit den Bezugszeichen 184-e und 184-f gekennzeichnet. Die Abtriebsbefestigungsaufnahmen 184 nehmen einen Teil der Abtriebsbefestigungsstruktur 180, also beispielsweise einen Nietkopf, in axialer Richtung auf.

Bei der Schwingungsdämpfereinheit 100 sind die Abtriebsbefestigungsaufnahmen 184 jeweils als Durchgangslöcher ausgebildet, durch die der Kopf oder ein Teil der Abtriebsbefestigungsstruktur 180 hindurchragen kann. Dabei weisen die Abtriebsbefestigungsaufnahmen 184 eine größere Ausdehnung auf, als die Abtriebsbefestigungsstruktur 180, sodass das Teilentkopplungsbauteil 162 nicht über die Abtriebsbefestigungsstrukturen 180, mit denen das Teilentkopplungsbauteil 164 an dem Abtriebsnabenflansch 166 befestigt ist, in Berührung kommt oder durch diese fixiert wird. Bei manchen Ausführungsbeispielen kann so ein Bauraum in axialer Richtung reduziert sein. Analog durchstoßen auch die Abtriebsbefestigungsstrukturen 180-a und 180-b sowie 180-c und 180-d entsprechende Durchgangslöcher oder Abtriebsbefestigungsaufnahmen im Teilentkopplungsbauteil 164.

Bei einigen weiteren, nicht dargestellten Ausführungsbeispielen können die Teilentkopplungsbauteile auch mit einer anderen Anzahl von Abtriebsbefestigungsstrukturen an der Abtriebsnabe befestigt sein. Analog kann das Teilentkopplungsbauteil dann eine entsprechende Anzahl an Abtriebsbefestigungsaufnahmen aufweisen. Bei einigen weiteren Ausführungsbeispielen kann das Teilentkopplungsbauteil auch keine Abtriebsbefestigungsaufnahme aufweisen. Optional kann auch eine andere Anzahl von Führungsstrukturvorsprüngen bzw. Nieten oder Befestigungsstrukturen vorgesehen sein.

Das Teilentkopplungsbauteil 164 ist ebenfalls mit dem Tilgerträger 114 verbunden. Da der Tilgerträger 114 in axialer Richtung eine geringere Ausdehnung als der Abtriebsnabenflansch 166 aufweist, ist an dem Tilgerträger 114 ein Abstandshalter 186 angeordnet. Der Abstandshalter 186 kann beispielsweise als Kunststoffring ausgebildet sein. Der Abstandshalter 186 weist im Wesentlichen analog zu dem Tilgerträger 114 eine Mehrzahl von Taumelentkopplungsanbindungsvorsprüngen 182-e bis 182-h auf. An diesen ist das Teilentkopplungsbauteil 162 mit seinen Führungsstrukturvorsprüngen 174 festgelegt. Beispielsweise ist an dem Taumelentkopplungsanbindungsvorsprung 182-h des Abstandshalters 186 der Führungsstrukturvorsprung 174-e vernietet. Dazu ist ein weiterer Niet 188 eingesetzt. Bei anderen Ausführungsbeispielen kann dieser durch eine andere Befestigungsstruktur oder eine andere Nietverbindung ersetzt sein.

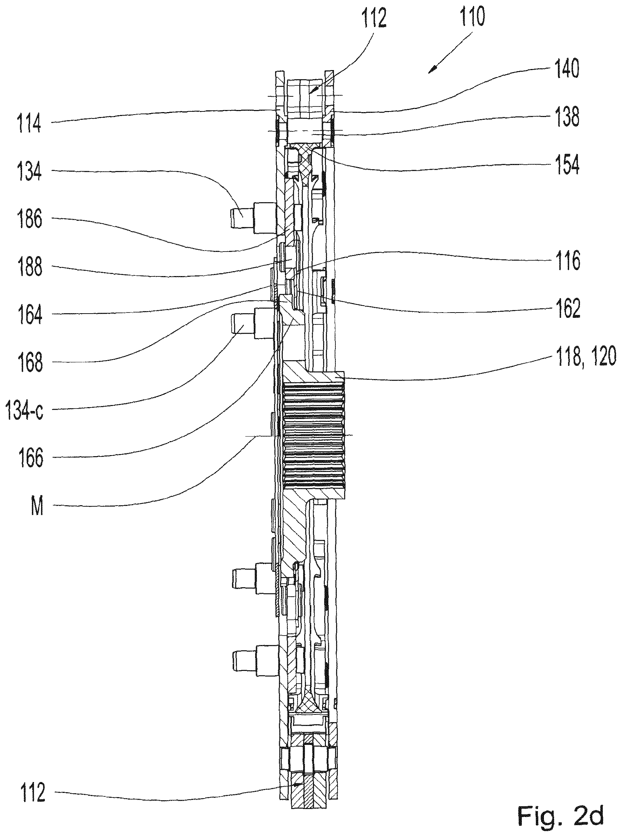

Einer der Niete 188 ist beispielsweise in der Schnittdarstellung der Fig. 2d erkennbar. Der Abstandshalter 186 ist über die Befestigungsstruktur 134, mit der auch der Tilgerträger 114 bzw. der Tilger oder Tilgerschwingungsdämpfer 110 taumelfest mit der Sekundärseite 106 des Torsionsdämpfers 102 verbunden ist, an dem Tilgerträger 114 befestigt. Bei der Schwingungsdämpfereinheit 110 sind in Umfangsrichtung acht der Befestigungsstrukturen 134 vorgesehen. Diese können beispielsweise ein Niet, ein Distanzbolzen oder ein anderes Befestigungsmittel sein. Bei einigen weiteren, nicht dargestellten Ausführungsbeispielen kann auch eine andere Anzahl an Befestigungsstrukturen vorgesehen sein.

Mit der Schwingungsdämpfereinheit 100 können beispielsweise Motorschwingungen von einem nachfolgenden Antriebsstrang entkoppelt werden. Dazu ist der Tilgerschwingungsdämpfer 110, der auch als ein System zur Beruhigung von Schwingungen bezeichnet werden kann, mit dem Torsionsdämpfer 102 kombiniert. Ein Funktionsprinzip des Tilgerschwingungsdämpfers 110 kann auf einer wechselweisen Wandlung von kinetischer und potentieller Energie beruhen. Energieverluste, die dabei zum Beispiel in Form von Reibung auftreten können, können die Funktion verschlechtern und sind deshalb unerwünscht. Wie beschrieben, werden bei der Schwingungsdämpfereinheit 100 die Tilgermassen 112 über wenigstens einen Wälzkörper 142, der auch als Rolle bezeichnet werden kann, an den Tilgerträgern 114 und 140 geführt, die auch als Trägerelemente bezeichnet werden können. Die Wälzkörper 142 stützen die Tilgermassen 112 dabei rollreibungsbehaftet in Radialrichtung und gleitreibungsbehaftet in axialer Richtung in den Laufflächen 148 und 150 ab, die beispielsweise nierenförmig ausgebildet sein können. Die gleitreibungsbehaftete Axialabstützung über die Wälzkörper 142 ist in einem Vergleich zu einem direkten axialen Anlaufen der Tilgermassen 112 an den Tilgerträgern 114 und 140, in Bezug auf geringe Reibungsverluste, günstiger. Eine Höhe der Reibungsverluste wird neben dem Reibwert und den Hebelverhältnissen auch durch die in Axialrichtung wirkenden Kräfte an den Kontaktstellen zwischen dem Wälzkörper 142 und der Tilgermasse 112 und dem Wälzkörper und den Tilgerträgern 114 und 140 bestimmt. Weil bei der Schwingungsdämpfereinheit 100 über die Taumelentkopplungsstruktur 116 auftretende Axialkräfte als Störgrößen möglichst reduziert oder minimiert werden können, kann unter Umständen eine Schwingungstilgungsfunktion verbessert werden.

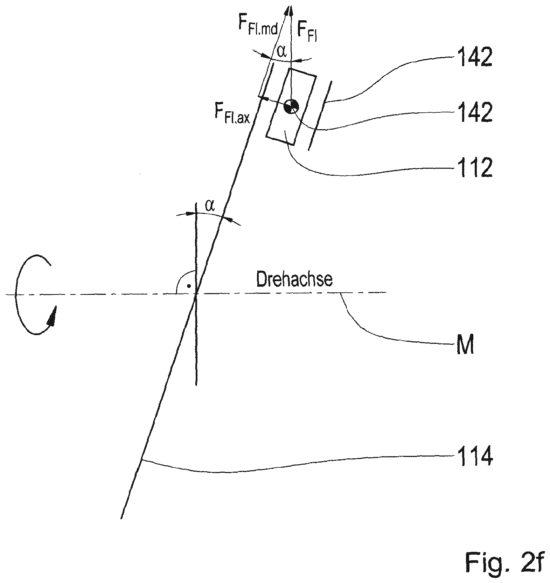

Fig. 2f. zeigt anhand einer schematischen Kräftezerlegung an einer Schwingungsdämpfereinheit das Problem, das durch die Taumelentkopplung 116 gelöst wird. F_{Fl} bezeichnet dazu die Fliehkraft. F_{Fl, rad} bezeichnet dabei eine radiale Komponente der Fliehkraft und F_{Fl, ax} bezeichnet dabei eine axiale unerwünschte Komponente der Fliehkraft.
Bei Schwingungsdämpfereinheiten kann es vorkommen, dass, beispielsweise im Fall von geometrischen Fehlern, Toleranzen einer Baugruppe, einem Planlauffehler der Tilgerträger zu einer Rotationsachse der Schwingungsdämpfereinheit, des Systems oder anderer führender Elemente oder durch eine taumelnde Getriebeeingangswelle eine Drehachse des Wälzkörpers, der auch als Tilgerrolle bezeichnet werden kann, von der Drehachse der Schwingungsdämpfereinheit abweicht. Neben einem Planlauffehler kann bei manchen Ausführungsbeispielen eine weitere Ursache eine Reaktion auf von außen eingetragene Beschleunigungen sein. Bei manchen Ausführungsbeispielen kann eine axiale Beschleunigung durch die Getriebeeingangswelle zu einer Axialkraft in einem System aus Führungsstruktur, Wälzkörper und Fliehgewicht führen. Dies kann beispielsweise in der Massenträgheit der einzelnen Komponenten begründet sein.

Durch die beschriebene Winkelabweichung kann eine auf die wenigstens eine Tilgermasse wirkende Fliehkraft, wie in der schematischen Kräftezerlegung der Fig. 2f dargestellt, eine unerwünschte Axialkomponente in Richtung der Drehachse oder Rollenachse des Wälzkörpers entwickeln.

Um solche Axialkräfte an der Tilgermasse 112 zu reduzieren oder sogar ganz zu vermeiden, wird die Taumelentkopplungsstruktur 116 verwendet. Eine auf einer Welle rotierende Scheibe, die schief zu einer drehachsenbildenden Welle M steht, hat das Bestreben, sich aufzurichten. Dies kann eine Folge der bereits beschriebenen Axialkraftkomponente sein. Deshalb wird die zu der Welle rotierende Scheibe, nämlich der Tilgerträger 114 bzw. der Tilgerschwingungsdämpfer 110 über ein flexibles Element, die Taumelentkopplungsstruktur 116 an der Welle bzw. der Abtriebsseite 118 oder der Abtriebsnabe 120 befestigt. So kann sie dem Bestreben sich aufzurichten, folgen. Durch die Aufrichtung des Tilgerträgers 114 wird die Axialkraft reduziert, da sie eine winkelabhängige Komponente in der Kraftzerlegung ist, wie in Fig. 2f dargestellt. Mit anderen Worten können also unter Umständen von außen eingetragene Axialbeschleunigungen bei manchen Ausführungsbeispielen ebenfalls durch die beschriebene, axialweiche Anbindung entkoppelt werden. Die axialweiche Anbindung kann bei manchen Ausführungsbeispielen in Verbindung mit einer Massenträgheit der aus einer in Blickrichtung der Abtriebsnabe hinter ihr liegenden Sekundärseite des Torsionsdämpfers, der er auch als Zweimassenschwungrad bezeichnet werden kann, wie ein Tiefpassfilter wirken. Beschleunigungen der Abtriebsseite können so herausgefiltert werden. Dadurch kann bei manchen Ausführungsbeispielen vermieden werden, dass solche Beschleunigungen Axialkräfte an dem Wälzkörper verursachen.

Mit anderen Worten betreffen manche Ausführungsbeispiele eine Taumelweichheit zwischen einem schwingungsreduzierenden System und dem Abtrieb, wobei das System einen Torsionsdämpfer und einen Tilgerschwingungsdämpfer umfasst. Die Komponenten innerhalb des Systems, der Torsionsdämpfer und der Tilgerschwingungsdämpfer, sind taumelfest miteinander verbunden. Dadurch kann bei manchen Ausführungsbeispielen eine Entkopplung bzw. eine Taumelentkopplung zwischen dem Schwingungsreduzierungssystem aus Torsionsdämpfer und Tilgermasse und der Abtriebsnabe bewirkt werden.

Der Tilgerschwingungsdämpfer 110, der die miteinander verbundenen bzw. vernieteten Tilgerträger 114 und 140 und die über die Wälzkörper geführten Tilgermassen umfasst, wird über die Taumelentkopplungsstruktur 116 zu der Drehachse M flexibel mit der Abtriebsseite 118 oder Abtriebsnabe 120 verbunden, während sie in Rotationsrichtung steif ausgebildet ist, um ein Drehmoment übertragen zu können. Die Taumelentkopplungsstruktur 116 kann dazu beispielsweise eine Bewegung in eine axiale Richtung des Tilgerträgers 114 von 0,1 mm bis 1 mm oder 1,5 mm zulassen.

Ausführungsbeispiele können Tilgerschwingungsdämpfer aller möglichen Bauarten umfassen. Beispielsweise kann der Tilgerschwingungsdämpfer auch eine zentrale Führungsstruktur oder ein zentrales Bahnblech aufweisen, wobei die wenigstens eine Tilgermasse in axialer Richtung beidseitig der Führungsstruktur angeordnet ist.

Ergänzend oder alternativ kann bei manchen Schwingungsdämpfereinheiten eine Sekundärseite des Torsionsdämpfers, die auch als Abtriebsnabenscheibe des Federsatzes ausgebildet sein kann, beispielsweise über eine Nietverbindung fest mit der Abtriebsnabe zu einer Sekundäreinheit verbunden sein. Optional können die Abtriebsnabenscheibe des Federsatzes und die Abtriebsnabe auch als eine einteilige Sekundäreinheit ausgebildet sein. Der Tilgerschwingungsdämpfer bzw Tilgerträger kann mit dieser Sekundäreinheit bei manchen Schwingungsdämpfereinheiten über die beschriebene Taumelentkopplungsstruktur oder andere Federelemente elastisch verbunden sein.

Bei einigen weiteren Schwingungsdämpfereinheiten kann die axial- und taumelweiche Anbindung der Führungsstruktur des Tilgerschwingungsdämpfers an einer Abtriebskomponente oder Sekundärseite eines Torsionsdämpfers auch auf andere Anwendungsfälle übertragen werden, wie beispielsweise auf eine Kupplungsglocke, auf ein nasslaufendes Anfahrsystem, auf einen Wandler oder auf eine hydrodynamisch gekühlte Kupplung. Ferner sind auch Anwendungen außerhalb einer Kupplungsglocke, wie beispielsweise an einem in einem Schaltgetriebe integrierten Torsionsdämpfer denkbar.

Bei einigen weiteren Schwingungsdämpfereinheiten kann eine Sekundärseite des Torsionsdämpfers anstelle einer Abtriebsnabe auch über eine andere Abtriebskomponente erfolgen. Die Abtriebsseite der Schwingungsdämpfereinheit kann bei manchen Ausführungsbeispielen mit einer Eingangswelle einer nachgeschalteten Doppelkupplung drehverbunden sein.

Ergänzend oder alternativ kann der Abtrieb über ein Sekundärschwungrad eines Zweimasseschwungrades in eine nachfolgende Reibkupplung, also verdrehwinkelunbeschränkt erfolgen. Bei solchen Ausführungsbeispielen kann eine Abtriebsnabenscheibe des Zweimasseschwungradfedersatzes, also die Sekundärseite des Torsionsdämpfers, beispielsweise über eine Nietverbindung fest mit einem Sekundärschwungrad zu einer Sekundäreinheit und der Tilgerschwingungsdämpfer mit dieser Sekundäreinheit über die Taumelentkopplungsstruktur gemäß Ausführungsbeispielen, oder über andere Federelemente, elastisch verbunden sein.

Bei einigen weiteren Schwingungsdämpfereinheiten sind die Führungsstruktur des Tilgerschwingungsdämpfers und die Sekundärseite des Torsionsdämpfers fest miteinander, zu einer Sekundäreinheit verbunden, wobei dann diese Sekundäreinheit über die Taumelentkopplungsstruktur gemäß Ausführungsbeispiel elastisch mit einer Abtriebsnabenscheibe der Schwingungsdämpfereinheit oder eines Zweimasseschwungradfedersatzes verbunden ist.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichen

- 100: Schwingungsdämpfereinheit
- 102: Torsionsdämpfer
- 104: Primärseite
- 106: Sekundärseite
- 108: Federelement
- 110: Tilgerschwingungsdämpfer
- 112: Tilgermasse
- 113: Niet/Tilgermassenbefestigungsstruktur
- 114: Tilgerträger/Führungsstruktur
- 116: Taumelentkopplungsstruktur
- 118: Abtriebsseite
- 120: Abtriebsnabe
- 122: Zahnkranz
- 123: Drehrichtung
- 124: Deckbauteil
- 126: Gehäuseschale
- 128: Federbereich
- 130: Federelementansteuerschuh
- 132: Federansteuersteg
- 134: Niet/Befestigungsstruktur
- 136: Senkung
- 137: Befestigungsabschnitt
- 138: Niet/Befestigungsstruktur
- 140: Tilgerträger/zweite Führungsstruktur
- 142: Wälzkörper
- 144: Wälzfläche
- 146: Wälzfläche
- 148: Lauffläche
- 150: Lauffläche
- 154: Stützkörper
- 156: Befestigungsauge
- 157: Schenkel außen
- 158: Stützabschnitt
- 159: paralleler Schenkel
- 160: Prägestruktur
- 161: paralleler Schenkel
- 162: Teilentkopplungsbauteil
- 163: Durchgangsöffnung
- 164: Teilentkopplungsbauteil
- 165: Schenkel
- 166: Abtriebsnabenflansch
- 168: Flügel
- 170: Bereich zwischen Flügeln
- 172: Abtriebsbefestigungsaufnahmeabschnitt
- 174: Führungsstrukturvorsprung
- 176: konkav nach innen gewölbter Abschnitt
- 178: Flügelvorsprung
- 180: Abtriebsbefestigungsstruktur
- 182: Taumelentkopplungsanbindungsvorsprung
- 184: Abtriebsbefestigungsaufnahme
- 186: Abstandshalter
- 188: Niet/Befestigungsstruktur
- 306: Freistellung

- M: axiale Richtung
- d: Innendurchmesser Zahnkranz
- D: Innendurchmesser Hüllraum Tilgermasse

## Patentansprüche

1. Schwingungsdämpfereinheit (100), beispielsweise für einen Antriebsstrang eines Kraftfahrzeugs, mit folgenden Merkmalen:
einem Torsionsdämpfer (102), der wenigstens eine Primärseite (104) und wenigstens eine Sekundärseite (106) aufweist, zwischen die wenigstens ein Federelement (108) derart gekoppelt ist, sodass eine Drehmomentübertragung von der Primärseite (104) zu der Sekundärseite (106) über das wenigstens eine Federelement (108) erfolgt,
einem Tilgerschwingungsdämpfer (110), der wenigstens eine Tilgermasse (112) und wenigstens eine Führungsstruktur (114) umfasst, wobei die Führungsstruktur (114) ausgebildet ist, um die wenigstens eine Tilgermasse (112) beweglich zu führen, um einen Schwingungsanteil einer Drehbewegung zu dämpfen; und
einer Taumelentkopplungsstruktur (116), die ausgebildet ist, um die Führungsstruktur (114) in axialer Richtung beweglich und drehfest oder verdrehwinkelunbeschränkt mit einer Abtriebsseite (118) der Schwingungsdämpfereinheit (100) zu verbinden,
wobei die Abtriebsseite (118) eine Abtriebsnabe (120) der Schwingungsdämpfereinheit (100) ist,
wobei die Taumelentkopplungsstruktur (116) wenigstens ein erstes und ein zweites Teilentkopplungsbauteil (162, 164) umfasst, und wobei die Abtriebsnabe (120) in axialer Richtung zwischen den beiden Teilentkopplungsbauteilen (162, 164) angeordnet ist,
wobei das erste Teilentkopplungsbauteil (162) mit wenigstens einer Abtriebsbefestigungsstruktur (180) an der Abtriebsseite (118) befestigt ist, **dadurch gekennzeichnet, dass** das zweite Teilentkopplungsbauteil (164) wenigstens eine Abtriebsbefestigungsaufnahme (184) aufweist, die ausgebildet ist um die wenigstens eine Abtriebsbefestigungsstruktur (180) des ersten Teilentkopplungsbauteils (162) aufzunehmen.

2. Schwingungsdämpfereinheit nach Anspruch 1, wobei die Taumelentkopplungsstruktur (116) in axialer Richtung mit der wenigstens einen Führungsstruktur (114) verbunden ist.

3. Schwingungsdämpfereinheit nach Anspruch 1 oder Anspruch 2, wobei die Schwingungsdämpfereinheit (100) wenigstens zwei Führungsstrukturen (114, 140) umfasst, die in axialer Richtung gegenüberliegend angeordnet sind, um die wenigstens eine Tilgermasse (112) beweglich zu führen, wobei die Taumelentkopplungsstruktur (116) in axialer Richtung an nur einer der Führungsstrukturen (114) anliegt.

4. Schwingungsdämpfereinheit nach einem der vorhergehenden Ansprüche, wobei die Abtriebsnabe (120) einen Abtriebsnabenflansch (166) umfasst, wobei der Abtriebsnabenflansch (166) wenigstens in einem Durchmesserbereich, in dem das erste Teilentkopplungsbauteil (162) mit wenigstens einer Abtriebsbefestigungsstruktur (180) an der Abtriebsnabe (120) befestigt ist, eine geringere Ausdehnung in eine axiale Richtung aufweist, als in einem radial weiter innenliegenden Bereich des Abtriebsnabenflansches (166).

5. Schwingungsdämpfereinheit nach einem der vorhergehenden Ansprüche, wobei das erste Teilentkopplungsbauteil (162) über wenigstens zwei Abtriebsbefestigungsstrukturen (180) an der Abtriebsnabe (120) befestigt ist, wobei die beiden Abtriebsbefestigungsstrukturen (180) im Wesentlichen in radialer Richtung gegenüberliegend zueinander angeordnet sind.

6. Schwingungsdämpfereinheit nach einem der Ansprüche 4 oder 5, wobei der Abtriebsnabenflansch (166) eine Mehrzahl von Flügeln (168) umfasst, die in Umfangsrichtung voneinander beabstandet sind und eine größere Ausdehnung in eine radiale Richtung aufweisen als ein Bereich (170) des Abtriebsnabenflansches (166), der in Umfangsrichtung zwischen den Flügeln (168) liegt.

7. Schwingungsdämpfereinheit nach Anspruch 6, wobei wenigstens eines der Teilentkopplungsbauteile (162, 164), an sich im Wesentlichen gegenüberliegenden Flügeln (168) befestigt ist.

8. Schwingungsdämpfereinheit nach einem der vorhergehenden Ansprüche, wobei das zweite Teilentkopplungsbauteil (164), um einen Winkel von im Wesentlichen 90°, versetzt zu dem ersten Teilentkopplungsbauteil (162) befestigt ist.

9. Schwingungsdämpfereinheit nach einem der vorhergehenden Ansprüche, wobei die Taumelentkopplungsstruktur (116) ausgebildet ist, um eine axiale Bewegung der wenigstens einen Tilgermasse (112) um einen Wert zwischen 0,1 mm und 1,5 mm zuzulassen.

10. Schwingungsdämpfereinheit nach einem der vorhergehenden Ansprüche, wobei die wenigstens eine Führungsstruktur (114) wenigstens einen Taumelentkopplungssanbindungsvorsprung (182) aufweist, an dem die Taumelentkopplungsstruktur (116) mit der wenigstens einen Führungsstruktur (114) verbunden ist.

11. Schwingungsdämpfereinheit nach einem der vorhergehenden Ansprüche, umfassend einen Abstandshalter (186), der in axialer Richtung zwischen der wenigstens einen Führungsstruktur (114) und der Taumelentkopplungsstruktur (116) oder zwischen der wenigstens einen Führungsstruktur (114) und wenigstens einem der Teilentkopplungsbauteile (162, 164) angeordnet ist.

12. Schwingungsdämpfereinheit nach einem der vorhergehenden Ansprüche, wobei der Tilgerschwingungsdämpfer (110) und der Torsionsdämpfer (102) taumelfest miteinander verbunden sind.

## Claims

1. Vibration damper unit (100), for example for a drivetrain of a motor vehicle, having the following features:
a torsional damper (102) which has at least one primary side (104) and at least one secondary side (106), between which at least one spring element (108) is coupled such that a transmission of torque from the primary side (104) to the secondary side (106) takes place via the at least one spring element (108),
an absorber vibration damper (110) which comprises at least one absorber mass (112) and at least one guide structure (114), wherein the guide structure (114) is designed to movably guide the at least one absorber mass (112) in order to dampen a vibration component of a rotational movement; and
a wobble decoupling structure (116) which is designed to connect the guide structure (114) movably in an axial direction and rotationally conjointly, or with an unrestricted angle of relative rotation, to an output side (118) of the vibration damper unit (100),
wherein the output side (118) is an output hub (120) of the vibration damper unit (100),
wherein the wobble decoupling structure (116) comprises at least one first and one second partial decoupling component (162, 164), and wherein the output hub (120) is arranged in an axial direction between the two partial decoupling components (162, 164),
wherein the first partial decoupling component (162) is fastened by means of at least one output fastening structure (180) to the output side (118), **characterized in that**
the second partial decoupling component (164) has at least one output fastening receptacle (184) which is designed to receive the at least one output fastening structure (180) of the first partial decoupling component (162).

2. Vibration damper unit according to Claim 1, wherein the wobble decoupling structure (116) is connected in an axial direction to the at least one guide structure (114).

3. Vibration damper unit according to Claim 1 or Claim 2, wherein the vibration damper unit (100) comprises at least two guide structures (114, 140) which are arranged opposite one another in an axial direction in order to movably guide the at least one absorber mass (112), wherein the wobble decoupling structure (116) bears in an axial direction against only one of the guide structures (114).

4. Vibration damper unit according to any of the preceding claims, wherein the output hub (120) comprises an output hub flange (166), wherein the output hub flange (166) has a smaller extent in an axial direction at least in a diameter region in which the first partial decoupling component (162) is fastened by means of at least one output fastening structure (180) to the output hub (120) than in a region of the output hub flange (166) situated radially further to the inside.

5. Vibration damper unit according to any of the preceding claims, wherein the first partial decoupling component (162) is fastened by means of at least two output fastening structures (180) to the output hub (120), wherein the two output fastening structures (180) are arranged substantially opposite one another in a radial direction.

6. Vibration damper unit according to either of Claims 4 and 5, wherein the output hub flange (166) comprises a multiplicity of vanes (168) which are spaced apart from one another in a circumferential direction and which have a greater extent in a radial direction than a region (170) of the output hub flange (166) which is situated in a circumferential direction between the vanes (168).

7. Vibration damper unit according to Claim 6, wherein at least one of the partial decoupling components (162, 164) is fastened to substantially oppositely situated vanes (168).

8. Vibration damper unit according to any of the preceding claims, wherein the second partial decoupling component (164) is fastened so as to be offset with respect to the first partial decoupling component (162) by an angle of substantially 90°.

9. Vibration damper unit according to any of the preceding claims, wherein the wobble decoupling structure (116) is designed to allow an axial movement of the at least one absorber mass (112) by a value of between 0.1 mm and 1.5 mm.

10. Vibration damper unit according to any of the preceding claims, wherein the at least one guide structure (114) has at least one wobble decoupling attachment projection (182) at which the wobble decoupling structure (116) is connected to the at least one guide structure (114).

11. Vibration damper unit according to any of the preceding claims, comprising a spacer (186) which is arranged in an axial direction between the at least one guide structure (114) and the wobble decoupling structure (116) or between the at least one guide structure (114) and at least one of the partial decoupling components (162, 164).

12. Vibration damper unit according to any of the preceding claims, wherein the absorber vibration damper (110) and the torsional damper (102) are connected to one another fixedly in terms of wobbling movements.

## Revendications

1. Amortisseur d'oscillations (100), par exemple pour une chaîne cinématique d'un véhicule automobile, comprenant les caractéristiques suivantes :
un amortisseur de torsion (102) qui présente au moins un côté primaire (104) et au moins un côté secondaire (106) entre lesquels est accouplé au moins un élément de ressort (108) de telle sorte qu'un transfert de couple du côté primaire (104) au côté secondaire (106) soit réalisé par le biais de l'au moins un élément de ressort (108),
un amortisseur de vibrations harmoniques (110) qui comprend au moins une masse d'amortissement (112) et au moins une structure de guidage (114), la structure de guidage (114) étant réalisée de manière à guider de manière déplaçable l'au moins une masse d'amortissement (112) afin d'amortir une proportion d'oscillation d'un mouvement de rotation ; et
une structure de désaccouplement en nutation (116), qui est réalisée de manière à relier la structure de guidage (114) dans la direction axiale de manière déplaçable et solidaire en rotation ou illimitée en termes d'angle de rotation à un côté de sortie (118) de l'amortisseur d'oscillations (100),
le côté de sortie (118) étant un moyeu de sortie (120) de l'amortisseur d'oscillations (100),
la structure de désaccouplement en nutation (116) comprenant au moins un premier et un deuxième composant de désaccouplement partiel (162, 164), et le moyeu de sortie (120) étant disposé dans la direction axiale entre les deux composants de désaccouplement partiel (162, 164),
le premier composant de désaccouplement partiel (162) étant fixé au côté de sortie (118) avec au moins une structure de fixation de sortie (180),
**caractérisé en ce que**
le deuxième composant de désaccouplement partiel (164) présente au moins un logement de fixation de sortie (184) qui est réalisé pour recevoir l'au moins une structure de fixation de sortie (180) du premier composant de désaccouplement partiel (162) .

2. Amortisseur d'oscillations selon la revendication 1, dans lequel la structure de désaccouplement en nutation (116) est connectée dans la direction axiale à l'au moins une structure de guidage (114) .

3. Amortisseur d'oscillations selon la revendication 1 ou la revendication 2, l'amortisseur d'oscillations (100) comprenant au moins deux structures de guidage (114, 140) qui sont disposées en regard dans la direction axiale, afin de guider de manière déplaçable l'au moins une masse d'amortissement (112), la structure de désaccouplement en nutation (116) s'appliquant dans la direction axiale contre seulement l'une des structures de guidage (114).

4. Amortisseur d'oscillations selon l'une quelconque des revendications précédentes, dans lequel le moyeu de sortie (120) comprend une bride de moyeu de sortie (166), la bride de moyeu de sortie (166), au moins dans une région de diamètre dans laquelle le premier composant de désaccouplement partiel (162) est fixé au moyeu de sortie (120) par au moins une structure de fixation de sortie (180), présentant une étendue dans la direction axiale inférieure à l'étendue dans une région de la bride de moyeu de sortie (166) située radialement plus à l'intérieur.

5. Amortisseur d'oscillations selon l'une quelconque des revendications précédentes, dans lequel le premier composant de désaccouplement partiel (162) est fixé au moyeu de sortie (120) par le biais d'au moins deux structures de fixation de sortie (180), les deux structures de fixation de sortie (180) étant disposées essentiellement en regard l'une de l'autre dans la direction radiale.

6. Amortisseur d'oscillations selon l'une quelconque des revendications 4 ou 5, dans lequel la bride de moyeu de sortie (166) comprend une pluralité d'ailettes (168) qui sont espacées les unes des autres dans la direction périphérique et qui présentent une plus grande étendue dans la direction radiale qu'une région (170) de la bride de moyeu de sortie (166) qui est située dans la direction périphérique entre les ailettes (168).

7. Amortisseur d'oscillations selon la revendication 6, dans lequel au moins l'un des composants de désaccouplement partiel (162, 164) est fixé à des ailettes (168) essentiellement opposées.

8. Amortisseur d'oscillations selon l'une quelconque des revendications précédentes, dans lequel le deuxième composant de désaccouplement partiel (164) est fixé de manière décalé d'un angle de sensiblement 90° par rapport au premier composant de désaccouplement partiel (162).

9. Amortisseur d'oscillations selon l'une quelconque des revendications précédentes, dans lequel la structure de désaccouplement en nutation (116) est réalisée de manière à autoriser un déplacement axial de l'au moins une masse d'amortissement (112) d'une valeur comprise entre 0,1 mm et 1,5 mm.

10. Amortisseur d'oscillations selon l'une quelconque des revendications précédentes, dans lequel l'au moins une structure de guidage (114) présente au moins une saillie de liaison de désaccouplement en nutation (182) au niveau de laquelle la structure de désaccouplement en nutation (116) est connectée à l'au moins une structure de guidage (114).

11. Amortisseur d'oscillations selon l'une quelconque des revendications précédentes, comprenant un élément d'espacement (186) qui est disposé dans la direction axiale entre l'au moins une structure de guidage (114) et la structure de désaccouplement en nutation (116) ou entre l'au moins une structure de guidage (114) et au moins l'un des composants de désaccouplement partiel (162, 164).

12. Amortisseur d'oscillations selon l'une quelconque des revendications précédentes, dans lequel l'amortisseur de vibrations harmoniques (110) et l'amortisseur de torsion (102) sont connectés l'un à l'autre de manière fixée en nutation.
